# EUROPÄISCHE PATENTANMELDUNG

(11) **EP 1 243 632 A1**
(43) Veröffentlichungstag der Anmeldung: **25.09.2002**
(21) Anmeldenummer: 01810272.3
(22) Anmeldetag: 19.03.2001
(51) Int. Cl.: C09D 201/00, C09D 7/12, C08K 5/17

(54) **Thermisch härtbare Lackzusammensetzung**

(71) Anmelder: Ciba Specialty Chemicals Holding Inc., 4057 Basel (CH)
(72) Erfinder: Valet, Andreas, 79589 Binzen (DE)

(57) **Zusammenfassung**

Säurekatalysiert vernetzbare Lackzusammensetzung enthaltend mindestens einen mittels Einwirkung einer Säure vernetzbaren Lackbestandteil; mindestens einen thermisch latenten Säurekatalysator oder einen photolatenten Säurekatalysator oder freie Säure; und mindestens eine photolatente Base.

## Beschreibung

Die vorliegende Erfindung betrifft thermisch härtbare, gegen Hydrolyse stabilisierte Zusammensetzungen, ein Härtungsverfahren für diese Zusammensetzungen sowie die Verwendung von photolatenten Basen als Neutralisator und dadurch Stabilisator in solchenZusammensetzungen.

Es ist bekannt, photolatente Basen in bestimmten Photoresistformulierungen einzusetzen. So beschreiben beispielsweise S. Matuszczak et al. in *J. Mater. Chem. 1991, 1(6), 1045-50* eine Photoresistzusammensetzung worin zunächst durch Belichtung eine photolatente Base freigesetzt wird, danach durch einen Erwärmungsschritt eine Säure gebildet wird, welche in den basenfreien, also unbelichteten, Teilen der Resistbeschichtung die Vernetzung bewirkt. Aus einem Artikel von Jean M.J. Fréchet in *Pure & Appl. Chem. 64(9), 1239-48, 1992,* der *EP-A 425142* und *EP-A 532183* sowie einer Publikation von Mark R. Winkle et al. in *J. Photopolym. Sci. and Technol. 3(3), 1990, 419-22* ist die Verwendung von photolatenten Basen und Säuren in Photoresists bekannt, wobei jeweils zunächst die Aktivierung der Komponenten durch Belichten erfolgt.

Lackbeschichtungen unterliegen in der Regel Beschädigungen durch Einwirkung von Umwelteinflüssen, insbesondere auch durch Hydrolyse. Säurehärtbare Lacksysteme sind durch nach der Vernetzung verbleibende überschüssige Säure in dieser Hinsicht besonders anfällig. In der Technik besteht ein Bedarf an, insbesondere im Hinblick auf Hydrolyse, stabilen Lackformulierungen.
Es wurde nun gefunden, dass säurehärtbare Lacksysteme, denen eine photolatente Base als Neutralisator, bzw. Stabilisator, zugesetzt wird, gegen Hydrolyse stabil sind.
Gegenstand der Erfindung ist daher eine säurekatalysiert vernetzbare Lackzusammensetzung enthaltend
(a) mindestens einen mittels Einwirkung einer Säure vernetzbaren Lackbestandteil;
(b) mindestens einen thermisch latenten Säurekatalysator oder einen photolatenten Säurekatalysator oder freie Säure; und
(c) mindestens eine photolatente Base, vorausgesetzt, dass bei der Verwendung eines photolatenten Säurekatalysators (b) die Aktivierungswellenlänge der photolatenten Base ungleich der des photolatenten Säurekatalysators ist.

Geeignete bekannte säureverenetzbare Verbindungen (a) sind z.B. Acryl-, Polyester-, Alkyd-, Melamin, Harnstoff-, Epoxy- und Phenolharze, oder Mischungen davon. Aminoharze, Phenolharze und Epoxyharze sind besonders geeignet. Säurehärtbare Harze dieses Typs sind allgemein bekannt und z.B. in Ullmann's Encyclopädie der Technischen Chemie, 4th Ed., Bd. 15 (1978), S. 613 - 628, beschrieben.

Diese Harze können beispielsweise auch mit Silikonen, Isocyanaten, Epoxiden, Isocyanuraten, Ketiminen oder Oxazolidinen modifiziert sein. Es kann sich auch um Ester von Cellulose, wie z.B. Nitrocellulose oder Celluloseacetobutyrat handeln, oder die Harze können Epoxidharze, die mit Polyaminen oder anderen Härterkomponenten vernetzen, sein.

Geeignete Alkyd-, Acryl-, Polyester- und Epoxidharze sind z.B. in S. Paul's "Surface Coatings: Science and Technology" (1985) auf den Seiten 70-310, beschrieben. Die unmodifizierten und modifizierten Alkydharze sind konventionelle Harze, wie sie im Handel und beispielsweise in Automobillacken oder -reparaturlacken eingesetzt werden. Solche Lacke basieren z.B. auf Alkydharzen, Alkyd/Acrylharzen und Alkyd/Siliconharzen, gegebenenfalls mit Isoocyanaten oder Epoxyharzen vernetzt.
Geeigenete Harze für säurekatalysiert thermisch vernetzbare Beschichtungen sind zum Beispiel heisshärtbare Acryl-, Polyester-, Polyurethane- Polyamid- oder Alkydharze. Dies beinhaltet sowohl Mischungen dieser Harze untereinander als auch Mischungen mit Vernetzern wie z.B. Melaminharzen, wie sie z.B. in H. Kittel's "Lehrbuch der Lacke und Beschichtungen", Bd. 1, Teil 2, S. 735 und 742 (Berlin 1972), "Lackkunstharze" (1977), von H. Wagner und H.F. Sarx, S. 229-238, und in S. Paul's "Surface Coatings: Science and Technology" (1985), beschrieben sind.
Unter dem Begriff Melaminharz versteht man dabei z.B. säurevernetzbare Aminoharze wie beispielsweise nicht-veretherte oder veretherte Melamin-, Harnstoff-, Guanidin oder Biuretharze verstanden. Bevorzugt sind in diesem Zusammenhang methylierte Melaminharze oder butylierte Melaminharze. Harze sind in diesem Zusammenhang als übliche technische Mischungen zu verstehen, welche normalerweise sowohl Oligomere, als auch reine und hochreine Verbindungen enthalten. N-Methoxymethylmelamin (Formel 7), Tetramethoxymethylglucoril (Formel 8) und N,N'-Dimethoxymethyluron (Formel 9) sind besonderns interessante säurehärtbare Harzkomponenten.

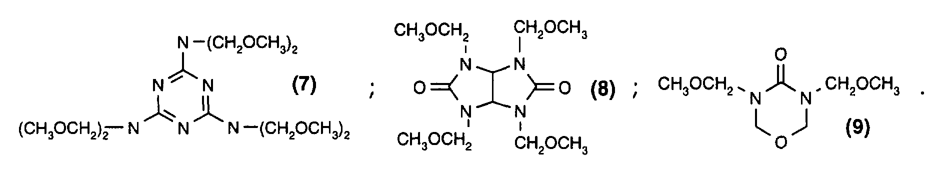

Weitere Harze, die durch die Katalyse von Säure vernetzbar sind, sind beispielsweise Mischungen von polyfunktionellen Alkoholen oder hydroxygruppenhaltigen Acryl- und Polyesterharzen, oder teilweise hydrolysierten Polyvinylacetalen oder Polyvinylalkoholen mit polyfunktionellen Acetalderivaten. Unter bestimmten Bedingungen ist z.B. auch die säurekatalysierte Selbstkondensation von acetalfunktionalisierten Harzen möglich.
Weitere säurekatalysiert härtbare Harze sind beispielsweise siloxangruppenhaltige Harze. Diese Harze können z.B. entweder eine Selbstkondensation durch säurekatalysierte Hydrolyse eingehen oder mit einer zweiten Komponente des Harzes wie beispielsweise einem polyfunktionellen Alkohol, einem hydroxygruppenhaltigen Acryl- oder Polyester-Harz, einem teilweise hydrolysierten Polyvinylacetal oder Polyvinylalkohol vernetzt werden. Diese Art von Polykondensation von Polysiloxanen ist z.B. in J.J. Lebrun, H. Pode, Comprehensive Polymer Science, Band 5, Seite 593, Pergamon Press, Oxford, 1989, beschrieben.

Spezifische Beispiele für als Komponente (a) geeignete Bindemittelsysteme sind:
1. Oberflächenbeschichtungen basierend auf kalt- oder heiss-vernetzbaren Alkyd-, Acrylat-, Polyester-, Epoxy- oder Melaminharzen oder Mischungen solcher Harze, gegebenenfalls mit Zugabe eines Härtungskatalysators;
2. zwei-Komponenten Polyurethan Oberflächenbeschichtungen basierend auf hydroxylgruppenhaltigen Acrylat-, Polyester- oder Polyetherharzen und aliphatischen oder aromatischen Isocyanaten, Isocyanuraten oder Polyisocyanaten;
3. ein-Komponenten Polyurethan-Oberflächenbeschichtungen basierend auf blockierten Isocyanaten, Isocyanuraten oder Polyisocyanaten, die während des Erwärmens deblockiert werden; es ist auch möglich gegebenenfalls Melaminharze zuzugeben;
4. ein-Komponentnen Polyurethan-Oberflächenbeschichtungen basierend auf aliphatischen oder aromatischen Urethanen oder Polyurethanen und hydroxylgruppenhaltigen Acrylat-, Polyester- oder Polyetherharzen;
5. ein-Komponentnen Polyurethan-Oberflächenbeschichtungen basierend auf aliphatischen oder aromatischen Urethanacrylaten oder Polyurethanacrylaten mit freien Amingruppen in der Urethanstruktur und Melaminharzen oder Polyetherharzen, gegebenenfalls unter Zugabe eines Härtungskatalysators;
6. zwei-Komponenten Oberflächenbeschichtungen basiered auf (Poly)ketiminen und aliphatischen oder aromatischen Isocyanaten, Isocyanuraten oder Polyisocyanaten;
7. zwei-Komponenten Oberflächenbeschichtungen basiered auf (Poly)ketiminen und einem ungesättigten Acrylatharz oder einem Polyacetoacetatharz oder einem Methacrylamidoglycolatmethylester;
8. zwei-Komponenten Oberflächenbeschichtungen basiered auf carboxyl- oder aminogruppenhaltigen Polyacrylaten und Polyepoxiden;
9. zwei-Komponenten Oberflächenbeschichtungen basiered auf anhydridgruppenhaltigen Acrylatharzen und einer Polyhydroxy- oder Polyaminokomponente;
10. zwei-Komponenten Oberflächenbeschichtungen basiered auf acrylathaltigen Anhydriden und Polyepoxiden;
11. zwei-Komponenten Oberflächenbeschichtungen basiered auf (Poly)oxazolinen und anhydridgruppenhaltigen Acrylatharzen oder ungesättigten Acrylatharzen oder aliphatischen oder aromatischen Isocyanaten, Isocyanuraten oder Polyisocyanaten;
12. zwei-Komponenten Oberflächenbeschichtungen basiered auf ungesättigten Polyacrylaten und Polymalonaten;
13. thermoplastische Polyacrylat-Oberflächenbeschichtungen basierend auf thermoplastischen Acrylatharzen oder extrinsisch vernetzenden Acrylatharzen in Kombination mit veretherten Melaminharzen.

Blockierte Isocyanate, die ebenfalls als Bestandteil der Komponente (a) eingesetzt werden können, sind z.B. in Organischer Metallschutz: Entwicklung und Anwendung von Beschichtungsstoffen, Seiten 159-160, Vincentz Verlag, Hanover (1993) beschrieben. Es handelt sich um Verbindungen, in denen die hochreaktive NCO-Gruppe durch Reaktion mit spezifischen Resten, z.B primärem Alkohol, Phenol, Essigsäureethylester, ε-Caprolactam, Phthalimid, Imidazol, Oxim oder Amin, "blockiert" ist. Das blockierte Isocyanat ist stabil in flüssigen Systemen und ebenso in der Gegenwart von Hydroxygruppen. Beim Erwärmen wird die blockierende Gruppe (Schutzgruppe) wieder entfernt und die NCO-Gruppe wird frei.

1-Komponenten (1K) und 2-Komponenten (2K) Systeme können als Bestandteil der Komponente (a) verwendet werden. Beispiele für solche Systeme sind in Ullmann's Encyclopedia of Industrial Chemistry, Bd. A18, Paints and Coatings, Seiten 404-407, VCH Verlagsgesellschaft mbH, Weinheim (1991) beschrieben.

Bevorzugt sind säurekatalysiert vernetzbare Lackzusammensetzungen enthaltend als Komponente (a) Acryl-, Polyester-, Alkydharze oder deren Mischungen und Melaminharze.

Als Komponente (b) der erfindungsgemässen Zusammensetzungen kommen sowohl in der Technik übliche thermisch latente als auch freie Säuren in Frage. Solche Verbindungen sind dem Fachmann bekannt und beispielsweise in "Ullman's Enc." Vol. A18, Seite, 469 oder "Karsten Lackrohstofftabellen" Vincentz Verlag Hannover 2000 oder Römpp Lexikon "Lacke und Druckfarben" G. Thieme Verlag Stuttgart 1998 beschrieben. Beispiele für geeignete Verbindungen sind Salzsäure, Phosphorsäure, Carbonsäuren, insbesondere Sulfonsäurederivate, wie beispielsweise p-Toluolsulfonsäure, Dodecylbenzolsulfonsäure, Dinonylnaphthalinsulfonsäure oder Dinonylnaphthalindisulfonsäure. Die Säuren können auch in Form von blockierten Dervivaten vorliegen, die unter der Einwirkung von Wärme die Säure freisetzen. Die Herstellung solcher Verbindungen ist allgemein bekannt und die Verbindungen sind im Handel erhältlich.
Bei der Komponente (b) kann es sich aber auch um eine photolatente Säure handeln deren Aktivierung bei einer anderen Wellenlänge erfolgt als die der photolatenten Base. Die Blokkierung der Säure kann sowohl ionogen als auch nicht-ionogen sein. Beispiele für photolatente Säuren sind z.B. Oniumsalze, wie Sulfonium- oder lodoniumsalze, sowie Oximsulfonsäureester. Solche Verbindungen sind in der Technik bekannt und in einer Vielzahl in der Literatur beschrieben. Beispiele sind Triarylsulfonium- oder Diaryliodoniumsalze, z.B. unsubstituiert oder mit Alkyl- oder Alkoxysubstituenten mit den unterschiedlichsten Anionen, wie beispielsweise HSO₄⁻, PF₆⁻, SbF₆⁻, AsF₆⁻, Cl⁻, Br⁻, I⁻, ClO₄⁻, PO₄⁻, SO₃CF₃⁻, Tosylat, oder einem Borat-Anion, wie etwa BF₄⁻, B(C₆F₅)₄⁻ usw..
Oniumsalze sind z.B. von J.V. Crivello, K. Dietliker "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 (insbesondere Seiten 464-466) beschrieben. lodoniumsalze sind aus einer Vielzahl von Patentschriften bekannt, z.B. US 4151175, US 3862333, US 4694029, EP 562897, US 4399071, WO 98/46647 usw., und sind beispielsweise "symmetrische" oder "unsymmetrische" Diaryliodoniumverbindungen der Formel (C) 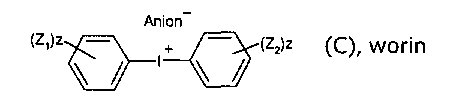 Z₁ und Z₂ gleich oder verschieden sind und beispielsweise lineares oder verzweigtes C₁-C₂₀-Alkyl, C₁-C₂₀-Alkoxy, Halogen, C₂-C₁₂-Alkenyl, Cycloalkyl darstellen; und
z unabhängig voneinander für 0 bis 5, insbesondere für 0 oder 1, stehen.
D.h. im Falle, dass mehrere Reste Z₁ oder Z₂ vorliegen, z also grösser als 0 ist, alle Z₁ oder alle Z₂ nicht die gleiche Bedeutung haben müssen.

Weitere photolatente Säurespender sind von M. Shirai und M. Tsunooka in Prog. Polym. Sci., Vol. 21, 1-45 (1996), in Form einer Übersicht zusammengefasst.
Andere geeignete photolatente Säuren sind Oximsulfonate. Auch diese Verbindungen sind in der Technik bekannt und beispielsweise in US 5237059, EP 571330, EP 241423, EP 139609, EP 361907, EP 199672, EP 48615, EP 12158, EP 780729 offenbart.
Beispiele sind α-(Methylsulfonyloxyimino)-4-methoxybenzylcyanid, α-(Methylsulfonyloxyimino)-3-methoxybenzylcyanid, α-(Methylsulfonyloxyimino)-3,4-dimethylbenzylcyanid, α-(Methylsulfonyloxyimino)-thiophen-3-acetonitril, α-(Isopropylsulfonyloxyimino)-thiophen-2-acetonitril, cis/trans-α-(Dodecylsulfonyloxyimino)-thiophen-2-acetonitril, usw.. Geeignet sind z.B. auch die in WO 00/10972 oder GB 2348644 beschriebenen Oximsulfonate. Oximverbindungen, welche andere Säuren als Sulfonsäuren abgeben sind ebenfalls geeignet und beispielsweise in WO 00/26219 offenbart.

Die vorstehende Aufzählung ist im Zusammenhang der vorliegenden Erfindung lediglich als beispielhaft und keineswegs als limitierend zu verstehen.
Im erfindungsgemässen Verfahren werden bevorzugt thermisch latente Säuren verwendet.

Bevorzugt sind säurekatalysiert vernetzbare Lackzusammensetzungen, enthaltend als Komponente (b) Sulfonsäure- oder Phosphorsäurederivate bzw. deren blockierte Dervivate, die durch die Einwirkung von Wärme oder Licht die Säure wieder freisetzen.

Die Komponente (b) wird den erfindungsgemässen Lackzusammensetzungen zweckmässig in einer Menge von 0.05 bis 10 Teile, z.B. 0.1 bis 10 Teile, bevorzugt 0.1 bis 5 Teile, bezogen auf 100 Teile Festharz (a), zugegeben.

Als photolatente Basen, Komponente (c), der erfindungsgemässen Zusammensetzungen, sind generell die in der Technik bekannten photolatenten Basen geeignet. Beispiele sind Verbindungen der Klassen o-Nitrobenzyloxycarbonylamine, 3,5-Dimethoxy-α,α-dimethylbenzyloxycarbonylamine, Benzoincarbamate, Derivate von Aniliden, photolatente Guanidine, generell photolatente tertiäre Amine, wie z.B. Ammoniumsalze von α-Ketocarbonsäuren, oder anderen Carboxylaten, Benzhydrylammoniumsalze, N-(Benzophenonylmethyl)-tri-N-alkylammonium-triphenylalkylborate, photolatente Basen auf der Basis von Metallkomplexen, wie z.B. Kobaltaminkomplexe, Wolfram- und Chrompyridinium-pentacarbonylkomplexe, anionengenerierende Photoinitatoren basierend auf Metallen, wie z.B. Chrom- und Kobaltkomplexe "Reinecke Salze" oder Metalloporphyrine geeignet. Beispiele dafür sind in J.V. Crivello, K. Dietliker "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998, publiziert.
Weiterhin als Komponente (c) der erfindungsgemässen Zusammensetzungen geeignet sind Basen wie in der der WO 97/31033 beschrieben. Dabei handelt es sich insbesondere um latente Basen auf Basis von sekundären Aminen, Guanidinen oder Amidinen. Beispiele sind Verbindungen der Formel (A) 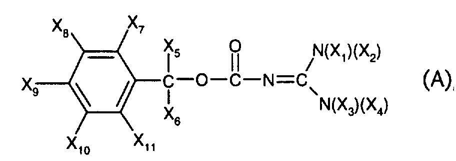 worin
X₁, X₂, X₃, X₄, X₅, X₆, X₇, X₈, X₉, X₁₀ und X₁₁ unabhängig voneinander Wasserstoff, C₁-C₂₀-Alkyl, Aryl, Arylalkyl, Halogen, Alkoxy, Aryloxy, Arylalkyloxy, Aryl-N-, Alkyl-N-, Arylalkyl-N-, Alkylthio, Arylthio, Arylalkylthio, NO-, CN, einen Carbonsäureesterrest, einen Carbonsäureamidrest, einen Keton- oder Aldehydrest darstellen, oder X₁, X₂, X₃ und X₄ eine Ringstruktur bilden können und worin X₅, X₆, X₇, X₈, X₉, X₁₀ und X₁₁ unabhängig von X₁, X₂, X₃ und X₄ eine- oder mehrere weitere Ringstrukturen bilden können.

Andere geeignete photolatente Basen sind in der EP 764698 offenbart. Es handelt sich dabei um verkappte Aminoverbindungen, z.B. der Formel (B) 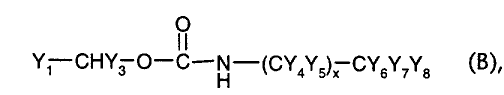 worin
Y₁ steht für einen Rest 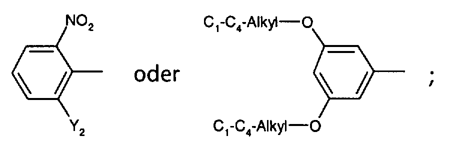 Y₂ bedeutet Wasserstoff oder NO₂;
Y₃ ist Wasserstoff oder C₁-C₈-Alkyl;
Y₄, Y₅, Y₆, Y₇ und Y₈ bedeuten unabhängig voneinander Wasserstoff oder F; und
n ist eine Zahl von 15 bis 29.

Insbesondere können auch Verbindungen auf Basis von α-Aminoketonen, wie in WO 98/32756 beschrieben, auf Basis von von α- Ammonium-, Iminium- oder Amidiniumketonen und Arylboraten, wie aus der WO 98/38195 bekannt, und, auf Basis von α-Aminoalkenen gemäss WO 98/41524, eingesetzt werden.

In den erfindungsgemässen Zusammensetzungen finden bevorzugt Verbindungen Verwendung, welche bei der Belichtung mit sichtbarem Licht oder UV-Licht eine Amidingruppe abspalten. Sie enthalten ein Strukturelement der Formel 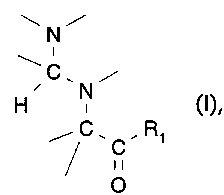 worin
R₁ einen zur Lichtabsorption im Wellenlängenbereich von 200 bis 650 nm befähigten aromatischen oder heteroaromatischen Rest bedeutet, der bei der Absorption eine Spaltung der benachbarten Kohlenstoff-Stickstoffbindung bewirkt.

Insbesondere sind das Verbindungen der Formel (II) 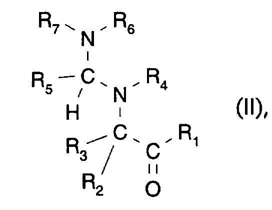 worin
R₁ wie vorstehend für die Formel (I) definiert ist;
R₂ und R₃ unabhängig voneinander Wasserstoff, C₁-C₁₈-Alkyl, C₃-C₁₈-Alkenyl, C₃-C₁₈-Alkinyl oder Phenyl sind und wenn R₂ Wasserstoff oder C₁-C₁₈-Alkyl ist, R₃ zusätzlich eine Gruppe -CO-R₁₄ bedeutet; oder
R₁ und R₃ zusammen mit der Carbonylgruppe und dem C-Atom, an welches R₃ gebunden ist, einen Benzocyclopentanonrest bilden;
R₅ C₁-C₁₈-Alkyl oder NR₁₅R₁₆ ist;
R₄, R₆, R₇, R₁₅ und R₁₆ unabhängig voneinander Wasserstoff oder C₁-C₁₈-Alkyl sind; oder
R₄ und R₆ zusammen eine C₂-C₁₂-Alkylenbrücke bilden; oder
R₅ und R₇ zusammen unabhängig von R₄ und R₆ eine C₂-C₁₂ Alkylenbrücke bilden oder wenn R₅ NR₁₅R₁₆ ist, R₁₆ und R₇ zusammen eine C₂-C₁₂-Alkylenbrücke bilden; und
R₁₄ für C₁-C₁₈-Alkyl oder Phenyl steht.

Interessant sind weiterhin Verbindungen, welche ein Strukturelement der Formel 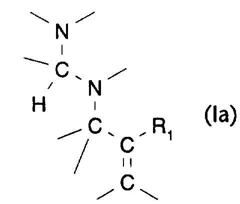 enthalten und bei der Belichtung mit sichtbarem Licht oder UV-Licht eine Amidingruppe abspalten. R₁ ist wie vorstehend definiert.

Insbesondere sind das Verbindungen der Formel der Formel (III) 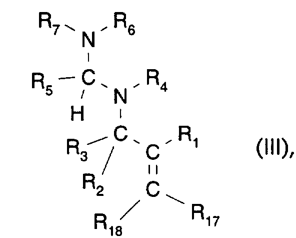 worin
R₁ R₂, R₃, R₄, R₅, R₆ und R₇ wie vorstehend für die Formel (II) definiert sind
R₁₇ Wasserstoff oder C₁-C₁₈-Alkyl ist;
R₁₈ Wasserstoff, C₁-C₁₈-Alkyl oder mit C₁-C₁₈-Alkyl, Vinyl, C₃-C₁₈-Alkenyl, C₃-C₁₈-Alkinyl, C₁-C₁₈-Halogenalkyl, Phenyl, NO₂, OH, CN, OR₁₀, SR₁₀, C(O)R₁₁, C(O)OR₁₂ oder Halogen substituiertes Phenyl bedeutet; und
R₁₀, R₁₁ und R₁₂ Wasserstoff oder C₁-C₁₈-Alkyl sind.

Auch geeignet sind die entsprechenden Ammonium-Borat Verbindungen der Formel (IV) und (IVa) 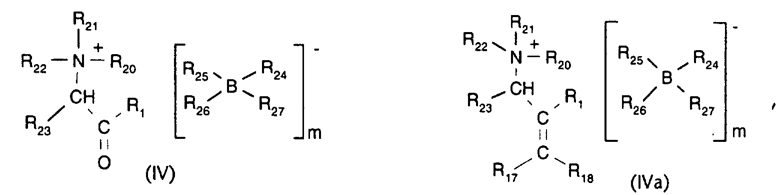 worin
**m** 1 oder 2 ist und der Anzahl positiver Ladungen des Kations entspricht;
R₁ die oben für Formel (1) angegebene Bedeutung hat;
R₁₇ und R₁₈ wie vorstehend in Formel (III) definiert sind;
R₂₀, R₂₁ und R₂₂ unabhängig voneinander Wasserstoff, C₁-C₁₈-Alkyl, C₃-C₁₈-Alkenyl, C₃-C₁₈-Alkinyl oder Phenyl sind oder unabhängig voneinander R₂₀ und R₂₁ und/oder R₂₂ und R₂₁ eine C₂-C₁₂-Alkylenbrücke bilden; oder R₂₀, R₂₁, R₂₂ mit dem Stickstoffatom, an welches sie gebunden sind, eine Phosphazen-Base vom Typ P1, P2, P4, oder eine Gruppe der Strukturformeln (a), (b), (c), (d), (e), (f) oder (g) bilden 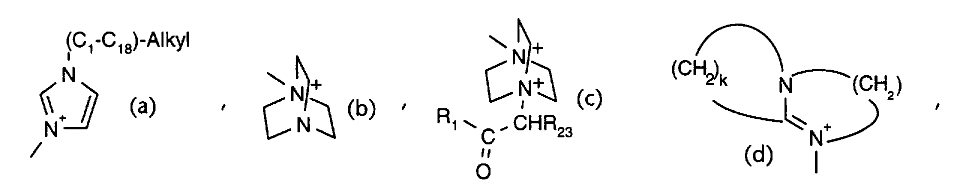 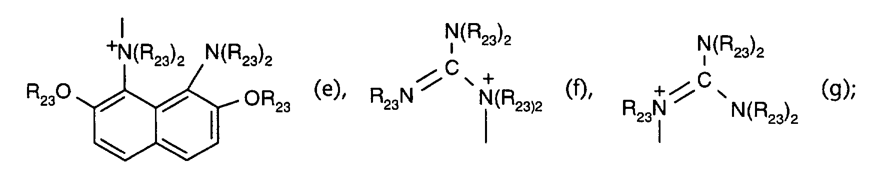 k und l unabhängig voneinander eine Zahl von 2 bis 12 bedeuten;
**R**₂₃ Wasserstoff oder C₁-C₁₈-Alkyl ist; oder
R₂₃ und R₁ zusammen mit den C-Atomen, an welche sie gebunden sind, einen Benzocyclopentanonrest bilden;
**R**₂₄, **R**₂₅ und **R**₂₆ für Phenyl oder einen anderen aromatischen Kohlenwasserstoff stehen, wobei diese Reste unsubstituiert oder mit C₁-C₁₈-Alkyl, C₃-C₁₈-Alkenyl, C₃-C₁₈-Alkinyl, C₁-C₁₈-Halogenalkyl, NO₂, OH, CN, OR₂₈, SR₂₈, C(O)R₂₉, C(O)OR₃₀ oder Halogen ein- oder mehrfach substituiert sind;
**R**₂₇ C₁-C₁₈-Alkyl, Phenyl oder einen anderen aromatischen Kohlenwasserstoff darstellt, wobei die Reste Phenyl und aromatischer Kohlenwasserstoff unsubstituiert oder mit C₁-C₁₈-Alkyl, C₃-C₁₈-Alkenyl, C₃-C₁₈-Alkinyl, C₁-C₁₈-Halogenalkyl, NO₂, OH, CN, OR₂₈, SR₂₈, C(O)R₂₉, C(O)OR₃₀ oder Halogen ein- oder mehrfach substituiert sind, oder R₂₇ für einen Rest 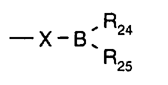 steht; und
X C₁-C₂₀-Alkylen, C₂-C₂₀-Alkylen, welches durch -O-, -S- oder NR₂₈ unterbrochen ist, bedeutet oder X 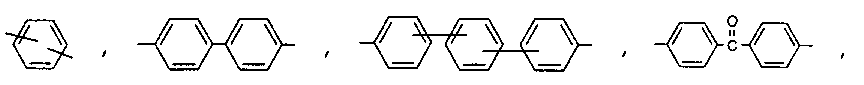 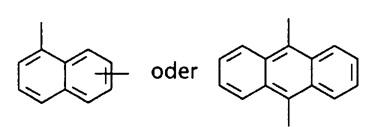 ist; und
R₂₈, R₂₉ und R₃₀ unabhängig voneinander wie R₂₃ definiert sind.

R₁ ist z.B. Phenyl, Naphthyl, Phenanthryl, Anthracyl, Pyrenyl, 5,6,7,8-Tetrahydro-2-naphthyl, 5,6,7,8-Tetrahydro-1-naphthyl, Thienyl, Benzo[b]thienyl, Naphtho[2,3-β]thienyl, Thianthrenyl, Dibenzofuryl, Chromenyl, Xanthenyl, Thioxanthyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phthalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Terphenyl, Stilbenyl, Fluorenyl oder Phenoxazinyl darstellt, wobei diese Reste unsubstituiert oder mit C₁-C₁₈-Alkyl, C₃-C₁₈-Alkenyl, C₃-C₁₈-Alkinyl, C₁-C₁₈-Halogenalkyl, NO₂, NR₁₅R₁₆, N₃, OH, CN, OR₁₀, SR₁₀, C(O)R₁₁, C(O)OR₁₂ oder Halogen ein- oder mehrfach substituiert sind, oder R₁ ist ein Rest der Formeln Z1 oder Z2 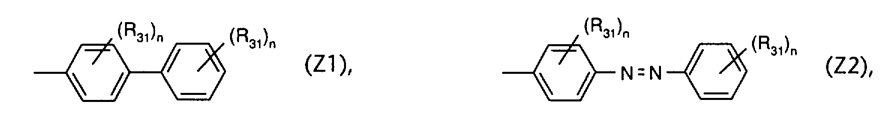 R₁₀, R₁₁ und R₁₂ unabhängig wie vorstehend für Formel (III) definiert sind;
R₁₅ und R₁₆ wie vorstehend für Formel (II) definiert sind;
R₃₁ C₁-C₁₈-Alkyl, C₂-C₁₈-Alkenyl, C₂-C₁₈-Alkinyl, C₁-C₁₈-Halogenalkyl, NO₂, NR₁₅R₁₆, OH, CN, OR₁₀, SR₁₀, C(O)R₁₁, C(O)OR₁₂ oder Halogen ist; und
n 0 oder eine Zahl 1, 2 oder 3 ist.

Die Herstellung der Verbindungen der Formeln (I), (II), (III), (IV) und (IVa) ist bekannt und in WO 98/32756, WO 98/38195, WO 98/41524 und WO 00/10964 beschrieben. Diesen Schriften sind ebenfalls konkrete Beispiele für diese Verbindungen zu entnehmen.
Bevorzugte Beispiele für Verbindungen der Formeln (la), (II) und (III) sind

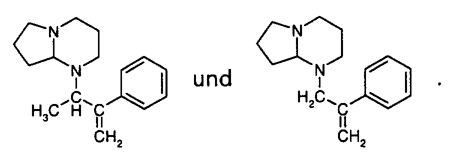

Weiterhin geeignet als photolatente Basenspender sind die in der EP 898202 beschriebenen α-Aminoketonverbindungen, wie z.B. (4-Morpholinobenzoyl)-1-benzyl-1-dimethylaminopropan oder (4-Methylthiobenzoyl)-1-methyl-1-morpholino-ethan.

Die nachstehenden Erläuterungen von Definitionen beziehen sich auf alle vorstehend genannten Definitionen in den Formeln A, B, C, I, la, II, III, IV und IVa.
C₁-C₂₀-Alkyl ist linear oder verzweigt und ist beispielsweise C₁-C₁₈-, C₁-C₁₂-, C₁-C₈-, C₁-C₆- oder C₁-C₄-Alkyl. Beispiele sind Methyl, Ethyl, Propyl, Isopropyl, n-Butyl, sec-Butyl, iso-Butyl, tert-Butyl, Pentyl, Hexyl, Heptyl, 2,4,4-Trimethyl-pentyl, 2-Ethylhexyl, Octyl, Nonyl, Decyl, Undecyl, Dodecyl, Tetradecyl, Pentadecyl, Hexadecyl, Heptadecyl, Octadecyl, Nonadecyl oder Icosyl. Bevorzugt sind Methyl und Butyl. C₁-C₁₈-Alkyl, C₁-C₈-Alkyl und C₁-C₄-Alkyl sind ebenfalls linear oder verzweigt und haben z.B. die oben angegebenen Bedeutungen bis zur entsprechenden Anzahl der C-Atome.
C₁-C₁₈-Halogenalkyl ist mit einem oder mehreren Halogenatomen substituiertes C₁-C₁₈-Alkyl, z.B. auch Perhalogeniertes Alkyl, wie etwa Trifluoromethyl usw..
Halogen bedeutet Fluor, Chlor, Brom und lod, insbesondere Chlor und Brom, vorzugsweise Chlor.
C₃-C₁₈-Alkenyl -Reste können ein- oder mehrfach ungesättigt, sowie linear oder verzweigt sein und sind beispielsweise C₃-C₈-, C₃-C₆- oder C₃-C₄-Alkenyl. Beispiele sind Allyl, Methallyl, 1,1-Dimethylallyl, 1-Butenyl, 2-Butenyl, 1,3-Pentadienyl, 1-Hexenyl, 1-Octenyl, Decenyl oder Dodecenyl, insbesondere Allyl.

Alkinyl mit 3 bis 18 Kohlenstoffatomen bedeutet einen verzweigten oder unverzweigten Rest wie beispielsweise Propinyl 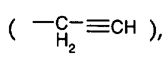 2-Butinyl, 3-Butinyl, n-2-Octinyl, oder n-2-Octadecinyl. Bevorzugt ist Alkinyl mit 3 bis 12, insbesondere 3 bis 6 Kohlenstoffatomen.
Beispiele für C₂-C₁₂-Alkylenbrücken sind Ethylen, Propylen Butylen, Pentylen, Hexylen, Heptylen, Octylen, Nonylen, Decylen, Undecylen oder Dodecylen.
Aryl steht ganz allgemein für einen aromatischen Kohlenwasserstoff, z.B. C₆-C₁₀-Aryl, Phenyl, 1-Naphthyl oder 2-Naphthyl, insbesondere Phenyl.
Arylalkyl ist z.B. Phenylalkyl, etwa Phenyl-C₁-C₆-alkyl wie z.B. Benzyl, Phenylethyl, α-Methylbenzyl, Phenylpentyl, Phenylhexyl oder α,α-Dimethylbenzyl, insbesondere Benzyl oder ist Naphthylalkyl wie z.B. Naphthyl-C₁-C₄-alkyl ist z.B. Naphthylmethyl, Naphthylethyl, Naphthylpropyl, Naphthyl-(1-methyl)eth-1-yl oder Naphthyl-(1,1-dimethyl)eth-1-yl, insbesondere Naphthylmethyl.
Alkoxy hat beispielsweise 1 bis 18 C-Atome, steht für lineare oder verzweigte Reste und ist beispielsweise C₁-C₁₂-, C₁-C₈-, C₁-C₆- oder C₁-C₄-Alkoxy. Beispiele sind Methoxy, Ethoxy, Propoxy, Isopropoxy, n-Butyloxy, sec-Butyloxy, iso-Butyloxy, tert-Butyloxy, Pentyloxy, Hexyloxy, Heptyloxy, 2,4,4-Trimethylpentyloxy, 2-Ethylhexyloxy, Octyloxy, Nonyloxy, Decyloxy, Dodecyloxy, Hexadecyloxy oder Octadecyloxy, insbesondere Methoxy, Ethoxy, Propoxy, Isopropoxy, n-Butyl-oxy, sec-Butyloxy, iso-Butyloxy, tert-Butyloxy, vorzugsweise Methoxy. In den Begriffen Aryloxy, Arylalkyloxy, Aryl-N-, Alkyl-N-, Arylalkyl-N-, Arylthio, Arylalkylthio, haben die Reste "Aryl" und "Alkyl" beispielsweise die oben angegebenen Bedeutungen. Alkylthio hat z.B. 1 bis 12 C-Atome und steht für lineare oder verzweigte Reste und ist beispielsweise C₁-C₈-, C₁-C₆- oder C₁-C₄-Alkylthio. Beispiele sind Methylthio, Ethylthio, Propylthio, Isopropylthio, n-Butylthio, sec-Butylthio, iso-Butylthio, tert-Butylthio, Pentylthio, Hexylthio, Heptylthio, 2,4,4-Trimethylpentylthio, 2-Ethylhexylthio, Octylthio, Nonylthio, Decylthio oder Dodecylthio, insbesondere Methylthio, Ethylthio, Propylthio, Isopropylthio, n-Butylthio, sec-Butylthio, iso-Butylthio, tert-Butylthio, vorzugsweise Methylthio.
Phosphazenbasen vom Typ P1, P2, P4 sind dem Fachmann bekannt und beispielsweise im Fluka Katalog für Chemikalien oder in Angew. Chem. 1993, 105, 1420 offenbart.

Im Zusammenhang der vorliegenden Anmeldung soll der Begriff "und/oder" ausdrücken, dass nicht nur eine der definierten Alternativen (Substituenten) vorhanden sein kann, sondern ebenfalls mehrere verschiedene der definierten Alternativen (Substituenten) gemeinsam, also Mischungen verschiedener Alternativen (Substituenten).
Der Begriff "mindestens" soll eins oder mehr als eins definieren, z.B. ein oder zwei oder drei, bevorzugt ein oder zwei.
In der Beschreibung und den Patentansprüchen, ist das Wort "enthaltend" so zu verstehen, dass ein definierter Gegenstand oder eine definierte Gruppe von Gegenständen eingeschlossen sind, jedoch ohne irgendwelche anderen nicht explizit genannten Stoffe auszuschliessen, sofern nicht ausdrücklich anders beschrieben.

Bevorzugt sind säurekatalysiert vernetzbare Lackzusammensetzungen, enthaltend als Komponente (c) eine Verbindung der Formel (III) 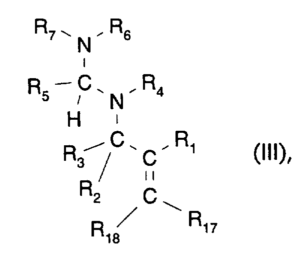 worin
R₁ einen zur Lichtabsorption im Wellenlängenbereich von 200 bis 650 nm befähigten aromatischen oder heteroaromatischen Rest bedeutet, der bei der Absorption eine Spaltung der benachbarten Kohlenstoff-Stickstoffbindung bewirkt;
R₂ und R₃ unabhängig voneinander Wasserstoff, C₁-C₁₈-Alkyl, C₃-C₁₈-Alkenyl, C₃-C₁₈-Alkinyl oder Phenyl sind und wenn R₂ Wasserstoff oder C₁-C₁₈-Alkyl ist, R₃ zusätzlich eine Gruppe -CO-R₁₄ bedeutet; oder
R₁ und R₃ zusammen mit der Carbonylgruppe und dem C-Atom, an welches R₃ gebunden ist, einen Benzocyclopentanonrest bilden;
R₅ C₁-C₁₈-Alkyl oder NR₁₅R₁₆ ist;
R₄, R₆, R₇, R₁₅ und R₁₆ unabhängig voneinander Wasserstoff oder C₁-C₁₈-Alkyl sind; oder
R₄ und R₆ zusammen eine C₂-C₁₂-Alkylenbrücke bilden; oder
R₅ und R₇ zusammen unabhängig von R₄ und R₆ eine C₂-C₁₂ Alkylenbrücke bilden oder wenn R₅ NR₁₅R₁₆ ist, R₁₆ und R₇ zusammen eine C₂-C₁₂-Alkylenbrücke bilden;
R₁₄ für C₁-C₁₈-Alkyl oder Phenyl steht;
R₁₇ Wasserstoff oder C₁-C₁₈-Alkyl ist;
R₁₈ Wasserstoff, C₁-C₁₈-Alkyl oder mit C₁-C₁₈-Alkyl, Vinyl, C₃-C₁₈-Alkenyl, C₃-C₁₈-Alkinyl, C₁-C₁₈-Halogenalkyl, Phenyl, NO₂, OH, CN, OR₁₀, SR₁₀, C(O)R₁₁, C(O)OR₁₂ oder Halogen substituiertes Phenyl bedeutet; und
R₁₀, R₁₁ und R₁₂ Wasserstoff oder C₁-C₁₈-Alkyl sind.

Die Komponente (c) wird den erfindungsgemässen Lackzusammensetzungen zweckmässig in einer Menge von 0.05 bis 10 Teilen, z.B. 0.1 bis 10 Teilen, bevorzugt 0.1 bis 5 Teilen, bezogen auf 100 Teile Festharz (a), zugegeben.

Erfindungsgemäss ist daher auch eine wie oben beschriebene säurekatalysiert vernetzbare Lackzusammensetzung, enthaltend 0.05% bis 10% der Komponente (c).

Die photopolymerisierbaren Gemische können ausser dem Photoinitiator verschiedene Additive (d) enthalten. Beispiele hierfür sind thermische Inhibitoren, die eine vorzeitige Polymerisation verhindern sollen, wie z.B. 2,2,6,6-Tetramethyl-4-hydroxy-piperidin-1-oxyl (4-Hydroxy-TEMPO) und Derivate davon, z.B. Bis(2,2,6,6-tetramethylpiperidin-1-oxyl-4-yl)-decandioat oder Polyalkyl-piperidin-N-oxyl Radikale, 3-Aryl-benzofuran-2-on und Derivate davon z.B. 5,7-Di-tert-butyl-3-phenyl-3H-benzofuran-2-on (wie z.B. in CH Anmeldung Nr. 2270/99 vom 9.12.99 beschrieben), Hydrochinon, Hydrochinonderivate, p-Methoxyphenol, β-Naphthol oder sterisch gehinderte Phenole wie z.B. 2,6-Di(tert-butyl)-p-kresol. Zur Erhöhung der Dunkellagerstabilität können z.B. Kupferverbindungen, wie Kupfernaphthenat, -stearat oder -octoat, Phosphorverbindungen, wie z.B. Triphenylphosphin, Tributylphosphin, Triethylphosphit, Triphenylphosphit oder Tribenzylphosphit, quartäre Ammoniumverbindungen, wie z.B. Tetramethylammoniumchlorid oder Trimethylbenzylammoniumchlorid, oder Hydroxylaminderivate, wie z.B. N-Diethylhydroxylamin verwendet werden. Zwecks Ausschluss des Luftsauerstoffes während der Polymerisation können Paraffin oder ähnliche wachsartige Stoffe zugesetzt werden, die bei Beginn der Polymerisation wegen mangelnder Löslichkeit im Polymeren an die Oberfläche wandern und eine transparente Oberflächenschicht bilden, die den Zutritt von Luft verhindert. Ebenso kann eine sauerstoffundurchlässige Schicht aufgetragen werden. Als Lichtschutzmittel können UV-Absorber, wie z.B. solche vom Hydroxyphenyl-benztriazol-, Hydroxyphenyl-benzophenon-, Oxalsäureamid- oder Hydroxyphenyl-striazin-Typ, zugesetzt werden. Es können einzelne oder Mischungen dieser Verbindungen mit oder ohne Einsatz von sterisch gehinderten Aminen (HALS) verwendet werden.
Beispiele für solche UV-Absorber und Lichtschutzmittel sind
1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Ditert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis-[4-(1,1,3,3-tetramethylbutyl)-6-benzotriazol-2-yl-phenol]; Umesterungsprodukt von 2-[3'tert-Butyl-5'-(2-methoxycarbonylethyl)-2'-hydroxy-phenyl]-benzotriazol mit Polyethylenglycol 300; [R-CH₂CH₂-COO-CH₂CH₂]₂- mit R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäureoctadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, a-Carbomethoxy-p-methoxy-zimtsäure-methylester, N-(β-Carbomethoxy-β-cyanovinyl)-2-methyl-indolin.
5. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetra(2,2,6,6-tetramethylpiperidin-4-yl)-butan-1,2,3,4-tetracarboxylat, Tetra(1,2,2,6,6-pentamethylpiperidin-4-yl)-butan-1,2,3,4-tetracarboxylat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 2,2,4,4-Tetramethyl-7-oxa-3,20-diaza-21 -oxo-dispiro[5.1.11.2]-heneicosan, 8-Acetyl-3-dodecyl-1,3,8-triaza-7,7,9,9-tetramethylspiro[4,5]-decan-2,4-dion, 1,1-Bis-(1,2,2,6,6-pentamethylpiperidin-4-yl-oxycarbonyl)-2-(4-methoxyphenyl)-ethen, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,-9-Tetramethyl-2-cycloundecyl-1-oxa-3,8-diaza-4-oxospiro[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrld-a-olefln-copolymer und 2,2,6,6-Tetramethyl-4-aminopiperidin oder 1,2,2,6,6-Pentamethyl-4-aminopiperidin.
6. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis-(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
8. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-ditert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit, 6-Fluor-2,4,8,10-tetra-tert-butyl-12-methyl-dibenz[d,g]-1,3,2-dioxaphosphocin, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit, 5-Butyl-5-ethyl-2-(2,4,6-tri-tert-butylphenoxy)-1,3,2-dioxaphosphiran.

Erfindungsgemäss ist daher auch eine wie vorstehend beschriebene säurekatalysiert vernetzbare Lackzusammensetzung enthaltend als zusätzliche Additive (d) mindestens einen UV-Absorber und/oder eine sterisch gehinderte Aminverbindung (HALS).

Weiterhin können in der Technik übliche Zusätze, wie beispielsweise Antistatika, Verlaufshilfsmittel, Rheologieadditive, Antioxidantien und Adhäsionsverbesserer eingesetzt werden. Weitere übliche Zusätze (d) sind - je nach Verwendungszweck - optische Aufheller, Füllstoffe, z.B. Kaolin, Talk, Barytr, Gips, Kreide oder silikatische Füllstoffe, Pigmente, Farbstoffe oder Netzmittel.

Die Formulierungen können als weitere Aditive (d) auch Farbstoffe und/oder weisse oder farbige Pigmente enthalten. Es können, je nach Anwendungszweck sowohl anorganische als auch organische Pigmente verwendet werden. Solche Zusätze sind dem Fachmann bekannt, einige Beispiele sind Titandioxid-Pigmente, z.B. vom Rutil- oder Anatas-Typ, Russ, Zinkoxid, wie Zinkweiss, Eisenoxide, wie Eisenoxidgelb, Eisenoxidrot, Chromgelb, Chromgrün, Nickeltitangelb, Ultramarinblau, Kobaltblau, Wismutvanadat, Cadmiumgelb oder Cadmiumrot. Beispiele für organische Pigmente sind Mono- oder Bisazopigmente, sowie Metallkomplexe davon, Phthalocyaninpigmente, polycyclische Pigmente, wie z.B. Perylen-, Anthrachinon-, Thioindigo-, Chinacridon- oder Triphenylmethanpigmente, sowie Diketo-Pyrrolo-Pyrol-, Isoindolinon-, z.B. Tetrachlorisoindolinon-, Isoindolin-, Dioxazin-, Benzimidazolon- und Chinophthalonpigmente.
Die Pigmente können einzeln aber auch im Gemisch in den Formulierungen eingesetzt werden.
Die Pigmente werden, je nach Verwendungszweck, den Formulierungen in in der Technik üblichen Mengen beigefügt, beispielsweise in einer Menge von 1 bis 60 Gew.-%, oder 10 bis 30 Gew.-%, bezogen auf die gesamte Masse.

Die Formulierungen können beispielsweise auch organische Farbstoffe der verschiedensten Klassen enthalten. Beispiele sind Azofarbstoffe, Methinfarbstoffe, Anthrachinonfarbstoffe oder Metallkomplexfarbstoffe. Übliche Konzentrationen sind beispielsweise 0.1 bis 20 %, insbesondere 1 bis 5 %, bezogen auf die gesamte Masse.

Die Wahl der Additive richtet sich nach dem jeweiligen Anwendungsgebiet und den für dieses Gebiet gewünschten Eigenschaften. Die vorstehend beschriebenen Additive (d) sind in der Technik üblich und werden demnach in Mengen, wie sie in der Technik üblich sind, eingesetzt.

Die erfindungegmässen Lackformulierungen werden nach in der Technik üblichen, dem Fachmann bekannten, Methoden hergestellt. Sie werden z.B. als Klarlackformulierungen aber auch als pigmentierte Lacke (z.B. Automobilbasislacke), aber auch klare oder pigmentierte Grundierungen auf die, je nach Anwendung, noch andere zusätzliche Lackschichten aufgebracht werden können.

Die Applikation der Formulierung auf das zu beschichtende Substrat erfolgt nach in der Technik üblichen Methoden, z.B. indem eine flüssige Zusammensetzung, eine Lösung oder Suspension auf das Substrat aufgebracht wird. Die Wahl des Lösungsmittels und die Konzentration richten sich hauptsächlich nach der Art der Zusammensetzung und nach dem Beschichtungsverfahren. Das Lösungsmittel soll inert sein, d.h. es soll mit den Komponenten keine chemische Reaktion eingehen und es soll bei der Trocknung nach dem Beschichten wieder entfernt werden können. Geeignete Lösungsmittel sind z.B. Ketone, Ether und Ester, wie Methylethylketon, Isobutylmethylketon, Cyclopentanon, Cyclohexanon, N-Methylpyrrolidon, Dioxan, Tetrahydrofuran, 2-Methoxyethanol, 2-Ethoxyethanol, 1-Methoxy-2-propanol, 1,2-Dimethoxyethan, Essigsäureethylester, Essigsäure-n-butylester und 3-Ethoxypropionsäureethylester.
Die Formulierung wird mittels bekannter Beschichtungsverfahren gleichförmig auf ein Substrat aufgebracht, z.B. durch Schleudern, Tauchen, Rakelbeschichtung, Vorhanggiessverfahren, Aufpinseln, Sprühen, speziell durch elektrostatisches Sprühen und Reverse-Roll-Beschichtung, sowie durch elektrophoretische Abscheidung. Beispiele für Arten der Applikation sind z.B. Ullmann's Encyclopedia of Industrial Chemistry, 5. Ed., Vol.A18, pp. 491-500 zu entnehmen.

Die Auftragsmenge (Schichtdicke) und Art des Substrates (Schichtträger) sind abhängig vom gewünschten Applikationsgebiet. Der Trockenschichtdickenbereich umfasst im allgemeinen Werte von ca 0,5 µm bis mehr als 100 µm.

Ein weiteres Einsatzgebiet für die erfindungsgemässe Lackzusammensetzung ist die Metallbeschichtung, beispielsweise bei der Lackierung von Blechen und Tuben, Dosen oder Flaschenverschlüssen, sowie die Photohärtung auf Kunststoffbeschichtungen, beispielsweise von Fussboden- oder Wandbelägen auf PVC-Basis.

Ebenfalls bevorzugt ist der Einsatz des Überzugsmittels als Decklack für Anwendungen in der Automobilindustrie, besonders als pigmentierte oder unpigmentierte Deckschicht des Lakkes. Die Verwendung für darunter liegende Schichten ist, wie vorstehend bereits erwähnt, jedoch auch möglich.

Das Härten der Formulierung kann bei Raumtemperatur erfolgen oder auch durch Erwärmen. Bei Verwendung einer photolatenten Säure wird zur Aktivierung der Säure geeignetes Licht eingestrahlt. Dabei wird die Wellenlänge des verwendeten Lichtes der Absorptionsfähigkeit des photolatenten Säurespenders angepasst.
Gegenstand der Erfindung ist daher auch ein Verfahren zum Härten von säurekatalysiert vernetzbaren Lackzusammensetzungen enthaltend
(a) mindestens einen mittels Einwirkung einer Säure vernetzbaren Lackbestandteil
(b) mindestens einen thermisch latenten Säurekatalysator oder einen photolatenten Säurekatalysator oder freie Säure; und
(c) mindestens eine photolatente Base vorausgesetzt, dass bei der Verwendung eines photolatenten Säurekatalysators (b) die Aktivierungswellenlänge der photolatenten Base ungleich der des photolatenten Säurekatalysators ist;
worin
(1) durch Erwärmen oder Bestrahlen mit Licht geeigneter Wellenlänge eine säurekatalysierte Vernetzung der komponente (a) durchgeführt wird;
   dadurch gekennzeichnet, dass
(2) durch anschliessende oder gleichzeitige Einwirkung von aktinischer Strahlung die Base aus der photolatenten Base (c) freigesetzt wird und diese die überschüssigen Anteile der Komponente (b) neutralisiert.

Die Freisetzung der photolatenten Base und gegebenenfalls auch der photolatenten Säure erfolgt durch Einwirkung von aktinischer Strahlung. Dabei wird zweckmässig sichergestellt, dass die Freisetzung der Base und die der Säure jeweils bei Strahlung unterschiedlicher Wellenlängen erfolgt. Die Freisetzung der Base erfolgt in bevorzugter Weise im Bereich des Sonnenlichtpektrums. Bei Bestrahlung mit künstlichem Licht können dazu Lampen mit unterschiedlichen spektralen Eigenschaften verwendet werden oder aber die Auswahl der jeweils geeigneten Wellenlänge über den Einsatz entsprechender Filter gewährleistet werden.

Die Lichtempfindlichkeit der erfindungsgemässen Zusammensetzungen reicht in der Regel von ca. 200 nm bis ca. 600 nm (UV-Gebiet). Geeignete Strahlung enthält z.B. Sonnenlicht oder Licht aus künstlichen Lichtquellen. Als Lichtquellen kommen daher eine grosse Anzahl der verschiedensten Typen zur Anwendung. Es sind sowohl Punktquellen als auch flächenförmige Strahler (Lampenteppiche) geeignet. Beispiele sind: Kohlelichtbogenlampen, Xenon-Lichtbogenlampen, Quecksilbermitteldruck-, Quecksilberhochdruck- und Quecksilberniederdruckstrahler, gegebenenfalls mit Metall-Halogeniden dotiert (Metall-Halogenlampen), mikrowellenangeregte Metalldampflampen, Excimer Lampen, superaktinische Leuchtstoffröhren, Fluoreszenzlampen, Argonglühlampen, Blitzlampen, z.B. Hochenergieblitzlampen, photographische Flutlichtlampen, lichtemittierende Dioden (LED). Der Abstand zwischen Lampe und zu belichtendem Substrat kann je nach Anwendungszweck und Lampentyp bzw. Lampenstärke variieren, z.B. zwischen 2 cm bis 150 cm.

Die thermische Härtung oder das Einbrennen der Lackformulierung erfolgt nach dem Fachmann bekannten Methoden. Im allgemeinen wird die Härtung in einem Ofen, z.B. Umluftofen, auf einer Heizplatte oder durch Bestrahlen mit IR-Lampen durchgeführt. Eine Härtung ohne Hilfsmittel bei Raumtemperatur ist ebenfalls möglich, je nach dem verwendeten Bindemittelsystem. Die Härtungstemperaturen liegen in der Regel zwischen Raumtemperatur und 400°C, z.B. 20-400°C oder 80-350°C, und die Einbrennzeiten betragen in der Regel von weniger als einer Minute bis zu mehr als einer Stunde.

Zur Unterstützung des Einbrennvorgangs können erfindungsgemäss zusätzlich auch thermische Trocknungs- bzw. Härtungskatalysatoren als zusätzliche Additive (d) der Formulierung zugegeben werden. Mögliche Trocknungskatalysatoren, bzw. thermische Härtungskatalysatoren, sind beispielsweise organische Metallverbindungen, Amine oder/und Phosphine. Organische Metallverbindungen sind z.B. Metallcarboxylate, insbesondere solche der Metalle Pb, Mn, Hf, Co, Zn, Zr oder Cu, oder Metallchelate, insbesondere solche der Metalle Hf, Al, Ti oder Zr oder Organometallverbindungen wie z.B. Organozinnverbindungen. Beispiele für Metallcarboxylate sind die Stearate von Pb, Mn oder Zn, die Octoate von Co, Zn oder Cu, die Naphthenate von Mn und Co oder die entsprechenden Linoleate oder Tallate. Beispiele für Metallchelate sind die Aluminium-, Titan- oder Zirkonium-Chelate von Acetylaceton, Ethylacetylacetat, Salicylaldehyd, Salicylaldoxim, o-Hydroxyacetophenon oder Ethyl-trifluoracetylacetat und die Alkoxide dieser Metalle. Beispiele für Organozinnverbindungen sind Dibutylzinnoxid, Dibutylzinndilaurat oder Dibutylzinndioctoat. Beispiele für Amine sind vor allem tertiäre Amine, wie z.B. Tributylamin, Triethanolamin, N-Methyl-diethanolamin, N-Dimethylethanolamin, N-Ethylmorpholin, N-Methylmorpholin oder Diazabicyclooctan (Triethylendiamin) sowie deren Salze. Weitere Beispiele sind quaternäre Ammoniumsalze, wie z.B. Trimethylbenzylammoniumchlorid. Als Härtungskatalysator können auch Phosphine verwendet werden, wie z.B. Triphenylphosphin. Geeignete Katalysatoren sind beispielsweise auch in J. Bielemann, Lackadditive, Wiley-VCH Verlag GmbH, Weinheim, 1998, Seite 244-247 beschrieben.
Der Einsatz solcher Katalysatoren erfolgt in dem Fachmann bekannten in der Technik üblichen Konzentrationen.

Erfindungsgemäss ist auch die Verwendung von photolatenten Basen als Neutralisator von überschüssiger Säure in säurekatalysiert härtbaren Lackzusammensetzungen. sowie ein Verfahren zur Neutralisation von überschüssiger Säure in säurekatalysiert härtbaren Lackzusammensetzungen, worin diesen Zusammensetzungen eine photolatente Base zugesetzt und durch Bestrahlen mit aktinischer Strahlung freigesetzt wird.
Geeignete photolatente Basen sind die vorstehend beschriebenen.

Die nachfolgenden Beispiele erläutern die Erfindung weiter. Angaben in Teilen oder Prozenten beziehen sich, ebenso wie in der übrigen Beschreibung und in den Patentansprüchen, auf das Gewicht, sofern nichts anderes angegeben ist. Wenn Alkyl- oder Alkoxyreste mit mehr als drei C-Atomen ohne Hinweis auf deren isomere Form angegeben sind, so beziehen sich die Angaben auf die jeweiligen n-lsomere.

### Beispiel: Herstellung eines Klarlacks

Durch Mischen der folgenden Komponenten wird eine Lackformulierung hergstellt:

| | |
|---|---|
| 56.16 g | eines OH-funktionellen Acrylats (^{RTM}Joncryl 510, Fa. SC Johnson Polymer BV, Niederlande) |
| 18.18 g | Hexamethoxymethylmelamin (^{RTM}Cymel 303, Fa, Cytec Ind., USA) |
| 14.16 g | Butanol |
| 9.89 g | Methylamylketon |
| 0.61 g | Verlaufshilfsmittel (DC-57, Fa. Dow Corning, Belgien) |

Dieser Formulierung wird 2% (bezogen auf das Festharz) p-Toluolsulfonsäure als Säurekatalysator zugegeben. Die Lackformulierung wird auf ein weisses Coil Coat Blech appliziert und bei 90°C während 30 Minuten eingebrannt. Es resultiert eine Trockenfilmdicke von ca. 40 µm.
Eine weitere Probe der gleichen Formulierung wird mit 2% der photolatenten Base 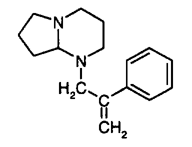 versetzt, wie vorstehend beschrieben appliziert und durch Einbrennen gehärtet.
Die Proben werden anschliessend in einem QUV® Gerät (Fa. Q-Panel Comp.) bewittert. Die mit der photolatenten Base versetzte Formulierung zeigt eine höhere Hydrolysestabilität als der Lack ohne Zugabe einer photolatenten Base.

## Patentansprüche

1. Säurekatalysiert vernetzbare Lackzusammensetzung enthaltend
(a) mindestens einen mittels Einwirkung einer Säure vernetzbaren Lackbestandteil;
(b) mindestens einen thermisch latenten Säurekatalysator oder einen photolatenten Säurekatalysator oder freie Säure; und
(c) mindestens eine photolatente Base, vorausgesetzt, dass bei der Verwendung eines photolatenten Säurekatalysators (b) die Aktivierungswellenlänge der photolatenten Base ungleich der des photolatenten Säurekatalysators ist.

2. Säurekatalysiert vernetzbare Lackzusammensetzung nach Anspruch 1, enthaltend als Komponente (b) Sulfonsäure- oder Phosphorsäurederivate bzw. deren blockierte Dervivate, die durch die Einwirkung von Wärme oder Licht die Säure wieder freisetzen.

3. Säurekatalysiert vernetzbare Lackzusammensetzung nach Anspruch 1, enthaltend als Komponente (c) eine Verbindung der Formel (III) 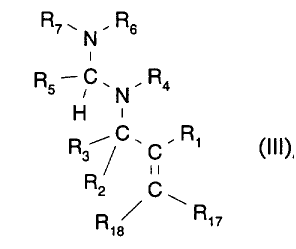 worin
R₁ einen zur Lichtabsorption im Wellenlängenbereich von 200 bis 650 nm befähigten aromatischen oder heteroaromatischen Rest bedeutet, der bei der Absorption eine Spaltung der benachbarten Kohlenstoff-Stickstoffbindung bewirkt;
R₂ und R₃ unabhängig voneinander Wasserstoff, C₁-C₁₈-Alkyl, C₃-C₁₈-Alkenyl, C₃-C₁₈-Alkinyl oder Phenyl sind und wenn R₂ Wasserstoff oder C₁-C₁₈-Alkyl ist, R₃ zusätzlich eine Gruppe -CO-R₁₄ bedeutet; oder
R₁ und R₃ zusammen mit der Carbonylgruppe und dem C-Atom, an welches R₃ gebunden ist, einen Benzocyclopentanonrest bilden;
R₅ C₁-C₁₈-Alkyl oder NR₁₅R₁₆ ist;
R₄, R₆, R₇, R₁₅ und R₁₆ unabhängig voneinander Wasserstoff oder C₁-C₁₈-Alkyl sind; oder
R₄ und R₆ zusammen eine C₂-C₁₂-Alkylenbrücke bilden; oder
R₅ und R₇ zusammen unabhängig von R₄ und R₆ eine C₂-C₁₂ Alkylenbrücke bilden oder wenn R₅ NR₁₅R₁₆ ist, R₁₆ und R₇ zusammen eine C₂-C₁₂-Alkylenbrücke bilden;
R₁₄ für C₁-C₁₈-Alkyl oder Phenyl steht;
R₁₇ Wasserstoff oder C₁-C₁₈-Alkyl ist;
R₁₈ Wasserstoff, C₁-C₁₈-Alkyl oder mit C₁-C₁₈-Alkyl, Vinyl, C₃-C₁₈-Alkenyl, C₃-C₁₈-Alkinyl, C₁-C₁₈-Halogenalkyl, Phenyl, NO₂, OH, CN, OR₁₀, SR₁₀, C(O)R₁₁, C(O)OR₁₂ oder Halogen substituiertes Phenyl bedeutet; und
R₁₀, R₁₁ und R₁₂ Wasserstoff oder C₁-C₁₈-Alkyl sind.

4. Säurekatalysiert vernetzbare Lackzusammensetzung nach Anspruch 3, enthaltend als Komponente (c) die Verbindung

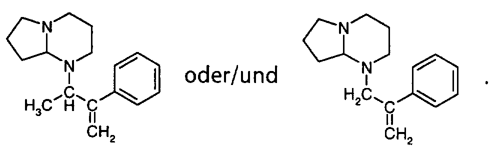

5. Säurekatalysiert vernetzbare Lackzusammensetzung nach einem der Ansprüche 1-4, enthaltend als Komponente (a) Acryl-, Polyester-, Alkydharze oder deren Mischungen und Melaminharze.

6. Säurekatalysiert vernetzbare Lackzusammensetzung nach Anspruch 1, enthaltend 0.05% bis 10% der Komponente (c).

7. Säurekatalysiert vernetzbare Lackzusammensetzung nach Anspruch 1, enthaltend als zusätzliche Additive (d) mindestens einen UV-Absorber und/oder eine sterisch gehinderte Aminverbindung (HALS).

8. Verfahren zum Härten von säurekatalysiert vernetzbaren Lackzusammensetzungen enthaltend
(a) mindestens einen mittels Einwirkung einer Säure vernetzbaren Lackbestandteil
(b) mindestens einen thermisch latenten Säurekatalysator oder einen photolatenten Säurekatalysator oder freie Säure; und
(c) mindestens eine photolatente Base vorausgesetzt, dass bei der Verwendung eines photolatenten Säurekatalysators (b) die Aktivierungswellenlänge der photolatenten Base ungleich der des photolatenten Säurekatalysators ist;
worin
(1) durch Erwärmen oder Bestrahlen mit Licht geeigneter Wellenlänge eine säurekatalysierte Vernetzung der Komponente (a) durchgeführt wird;
**dadurch gekennzeichnet, dass**
(2) durch anschliessende oder gleichzeitige Einwirkung von aktinischer Strahlung die Base aus der photolatenten Base (c) freigesetzt wird und diese die überschüssigen Anteile der Komponente (b) neutralisiert.

9. Verwendung von photolatenten Basen als Neutralisator von überschüssiger Säure in säurekatalysiert härtbaren Lackzusammensetzungen.

10. Verfahren zur Neutralisation von überschüssiger Säure in säurekatalysiert härtbaren Lackzusammensetzungen, worin diesen Zusammensetzungen eine photolatente Base zugesetzt und durch Bestrahlen mit aktinischer Strahlung freigesetzt wird.
